# EUROPÄISCHE PATENTSCHRIFT

(11) **EP 4 269 200 B1**
(45) Veröffentlichungstag und Bekanntmachung des Hinweises auf die Patenterteilung: **22.10.2025**
(21) Anmeldenummer: 23166901.1
(22) Anmeldetag: 06.04.2023
(51) Int. Cl.: B60W 10/06, B60W 20/16

(54) **VERFAHREN UND KRAFTFAHRZEUG ZUR REDUZIERUNG VON EMISSIONEN EINER BRENNKRAFTMASCHINE BEI KALTABFAHRT**
METHOD AND VEHICLE FOR REDUCING EMISSIONS OF AN INTERNAL COMBUSTION ENGINE DURING COLD DEPARTURE
PROCÉDÉ ET VÉHICULE POUR RÉDUIRE DES ÉMISSIONS D'UN MOTEUR À COMBUSTION INTERNE LORS D'UN DÉMARRAGE À FROID

(30) Priorität: 29.04.2022 DE 102022110509
(43) Veröffentlichungstag der Anmeldung: 01.11.2023
(73) Patentinhaber: VOLKSWAGEN AG, 38440 Wolfsburg (DE)
(72) Erfinder: PAUKNER, Stefan, 38442 Wolfsburg (DE); BARON VON CEUMERN-LINDENSTJERNA, Falk-Christian, 38124 Braunschweig (DE); KRAUS, Stephan, 38464 Groß Twülpstedt (DE); WENDENBURG, Stefan, 38550 Isenbüttel (DE); BUNKUS, Johannes, 39393 Barneberg (DE)
(74) Vertreter: Gulde & Partner

(56) Entgegenhaltungen:
- DE-A1- 102016 206 658
- FR-A1- 3 103 771
- US-A1- 2001 032 621
- US-A1- 2015 285 161
- US-A1- 2020 109 675

## Beschreibung

Die Erfindung ein betrifft ein Verfahren und ein Kraftfahrzeug zur Reduzierung vom Emissionen einer Abgasanlage einer Brennkraftmaschine bei Kaltabfahrt.

Als Stand der Technik werden die Druckschriften DE 10 2017 111 027 A1, US 2018/016967 A1, DE 10 2020 104 552 A1 und US 2019/249596 A1 genannt. Zum Stand der Technik gehören ferner die Druckschriften FR 3 103 771 A1, US 2015/0285161 A1, US 2020/0109675 A1 und DE 10 2016 206 658 A1 sowie US 2001/032621 A1.

Es ist vorgesehen, die Schadstoffemissionen von Kraftfahrzeug noch weiter zu reduzieren.

Der Erfindung liegt die Aufgabe zugrunde, die Endrohremissionen nach einem Motorkaltstart einer Brennkraftmaschine zu minimieren sowie die Abgasanlage möglichst schnell auf Betriebstemperatur zu bringen.

Die Patentanmeldung betrifft eine Brennkraftmaschine eines Kraftfahrzeuges, insbesondere mit Mild-Hybrid-Antrieb sowie Doppelkupplungsgetriebe, alternativ Automatikgetriebe oder Handschalter mit eClutch. Ein Mild-Hybrid-Antrieb setzt sich aus zwei zentralen Bausteinen zusammen.

Ein erster Baustein ist ein wassergekühlter Starter-Generator, insbesondere ein Riemen-Starter-Generator an der Brennkraftmaschine, insbesondere an der Stirnseite einer Brennkraftmaschine. Ein zweiter Baustein ist ein hochbelastbarer Keilrippenriemen, der den Riemen-Starter-Generator mit der Kurbelwelle verbindet. Ein solcher Starter-Generator erreicht eine Rekuperationsleistung von beispielsweise bis 12 kW und ein Drehmoment von beispielsweise 60 Nm.

Ziel und Aufgabe der Erfindung ist es, die Endrohremissionen kurz nach dem Kaltstart der Brennkraftmaschine zu minimieren sowie die zu der Brennkraftmaschine gehörende Abgasanlage möglichst schnell auf ihre Betriebstemperatur zu bringen.

Es ist erfindungsgemäß ein Verfahren zur Reduzierung von Emissionen einer Abgasanlage einer Brennkraftmaschine eines Kraftfahrzeuges bei einem Kaltstart der Brennkraftmaschine mit folgenden Schritten vorgesehen:
- Starten der Brennkraftmaschine mittels eines der Brennkraftmaschine zugeordneten Starter-Generators zu einem Startzeitpunkt.
- Anschließend Aktivieren einer Abfahrverzögerung zu einem Beginnzeitpunkt für eine vorgebbare Zeitspanne, bei der die Brennkraftmaschine derart von einem Antriebsstrang des Kraftfahrzeuges getrennt ist, so dass eine Abfahrt des Kraftfahrzeuges nicht möglich ist.
- Schnellstmögliches Einstellen eines optimalen Betriebspunktes ab dem Beginnzeitpunkt, wobei der optimale Betriebspunkt durch eine oberhalb einer dem Kraftfahrzeug zugeordneten Leerlaufdrehzahl einer Kurbelwelle der Brennkraftmaschine liegenden vorgebbaren Drehzahl und ein vorgebbares erhöhtes Drehmoment definiert ist.
- Betreiben des Starter-Generators ab dem Beginnzeitpunkt in einem generatorischen Betrieb, in der vorgegebenen Zeitspanne, bis zu einem Endzeitpunkt der Abfahrverzögerung und Erzeugen von elektrischer Energie.

Erfindungsgemäß ist weiter vorgesehen, dass die vom Starter-Generator im generatorischen Betrieb erzeugte elektrische Energie in der vorgegebenen Zeitspanne während der Abfahrverzögerung direkt
- zu einem elektrisch beheizten Wärmetauscher geführt und verbraucht wird, der die elektrische Energie in Wärme umwandelt, die in einer Verbrennungsluftansaugstrecke der Brennkraftmaschine zu einer Temperaturanhebung der Verbrennungsluft führt, und/oder
- zu einem elektrischen Heizer geführt und verbraucht wird, der die elektrische Energie in Wärme umwandelt, die in einer Kühlwasserstrecke der Brennkraftmaschine zu einer Temperaturanhebung des Kühlwassers führt, und/oder
- zu einem brennkraftmaschinenfernen elektrischen Verbraucher des Kraftfahrzeuges geführt und verbraucht wird,
wobei zeitlich parallel überschüssige Energie in mindestens einer die elektrische Energie speichernden Batterie des Kraftfahrzeuges gespeichert wird.

Bevorzugt ist vorgesehen, dass das Einstellen des optimalen Betriebspunktes durch eine Anhebung des Drehmoments in einem vorgebbaren Momentenbereich auf ein bestimmtes Drehmoment schnellstmöglich innerhalb der vorgegebenen Zeitspanne erfolgt, wobei diesem bestimmten Drehmoment in der vorgegebenen Zeitspanne schnellstmöglich eine bestimmte Drehzahl in einem Drehzahlbereich zugeordnet ist und eingestellt wird.

Bevorzugt ist vorgesehen, dass eine maximale Anhebung des bestimmten Drehmomentes auf 40 Nm und eine maximale Anhebung der bestimmten Drehzahl auf 1600 Umdrehungen pro Minute vorgenommen wird.

Erfindungsgemäß ist bevorzugt vorgesehen, dass ein vorgebbarer Zeitraum zwischen dem Startzeitpunkt der Brennkraftmaschine und dem Beginnzeitpunkt der Anhebung und Abfahrverzögerung maximal 3 s beträgt.

Ferner ist bevorzugt vorgesehen, dass die vorgebbare Zeitspanne der Anhebung auf den optimalen Betriebspunkt und der Abfahrverzögerung, in welcher der optimale Betriebspunkt gefahren werden soll beziehungsweise gefahren wird, vorgebbar zwischen 3 s und 20 s eingestellt wird.

Das Verfahren zeichnet sich ferner dadurch aus, dass die in der mindestens einen Batterie gespeicherte elektrische Energie außerhalb der Abfahrverzögerung nach der vorgegebenen Zeitspanne der Abfahrverzögerung zum Boosten der Brennkraftmaschine eingesetzt wird, indem der Starter-Generator motorisch zur Unterstützung der Brennkraftmaschine zum Antreiben des Kraftfahrzeuges eingesetzt wird.

Erfindungsgemäß ist das Kraftfahrzeug eingerichtet, das erfindungsgemäße Verfahren nach Anspruch 1 zur Reduzierung von Emissionen einer Abgasanlage einer Brennkraftmaschine bei einem Kaltstart auszuführen. Das Kraftfahrzeug umfasst die Brennkraftmaschine und die mit der Brennkraftmaschine in Verbindung stehende Abgasanlage, wobei die Brennkraftmaschine mit einem Starter-Generator ausgerüstet ist.

Es ist vorgesehen, dass in einer Verbrennungsluftansaugstrecke der Brennkraftmaschine ein elektrisch beheizter Wärmetauscher und/oder in einer Kühlwasserstrecke der Brennkraftmaschine ein elektrischer Heizer und/oder mindestens ein weiterer brennkraftmaschinenferner Verbraucher angeordnet ist/sind, wobei der Starter-Generator elektrisch und ansteuerungsseitig mit dem Wärmetauscher und/oder dem elektrischen Heizer und/oder dem brennkraftmaschinenfernen Verbraucher verknüpft ist/sind, so dass der Wärmetauscher und/oder der elektrische Heizer und/oder der brennkraftmaschinenferne Verbraucher vom Starter-Generator im generatorischen Betrieb des Starter-Generators mit elektrischer Energie versorgt wird/werden, wobei ferner vorgesehen ist, dass der Starter-Generator elektrisch und ansteuerungsseitig mit mindestens einer Batterie des Kraftfahrzeuges verknüpft ist, so dass die vom Starter-Generator im generatorischen Betrieb erzeugte elektrische Energie in der mindestens einen Batterie speicherbar ist.

Die mindestens eine Batterie des Kraftfahrzeuges ist elektrisch und ansteuerungsseitig mit der Brennkraftmaschine verknüpft, so dass die in der mindestens einen Batterie gespeicherte elektrische Energie zum Boosten der Brennkraftmaschine einsetzbar ist, indem der Starter-Generator die Brennkraftmaschine außerhalb der Abfahrverzögerung motorisch zum Antreiben des Kraftfahrzeuges unterstützt.

Wie erwähnt, ist das Kraftfahrzeug dazu eingerichtet, das erfindungsgemäße Verfahren zur Reduzierung von Emissionen der Abgasanlage der Brennkraftmaschine des Kraftfahrzeuges bei dem Kaltstart auszuführen. Zu diesem Zweck umfasst das Kraftfahrzeug mindestens eine Steuereinrichtung, in der ein computerlesbarer Programmalgorithmus eines Applikationsprogramms zur Ausführung des Verfahrens und gegebenenfalls erforderliche Kennfelder gespeichert sind.

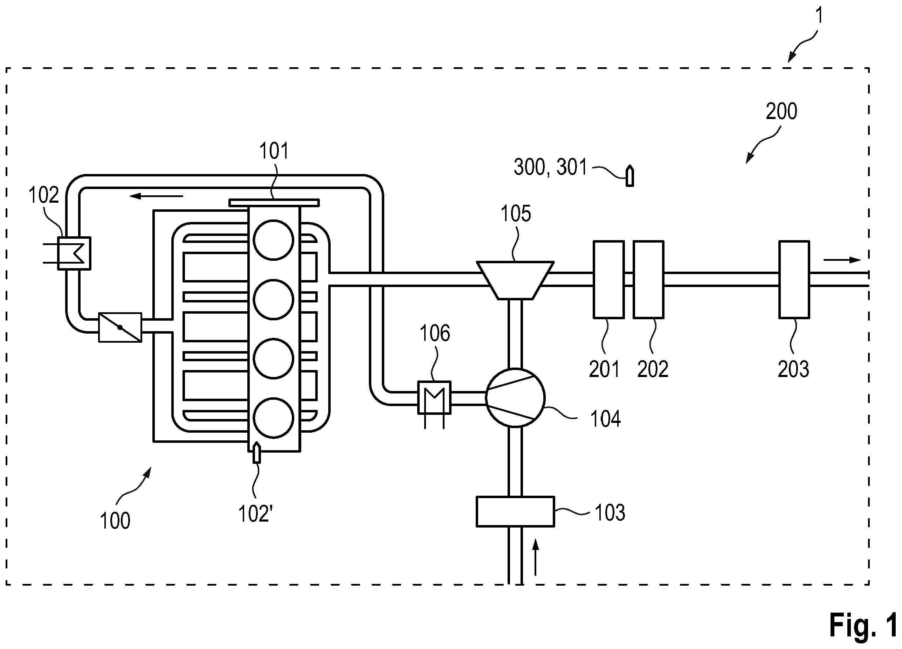

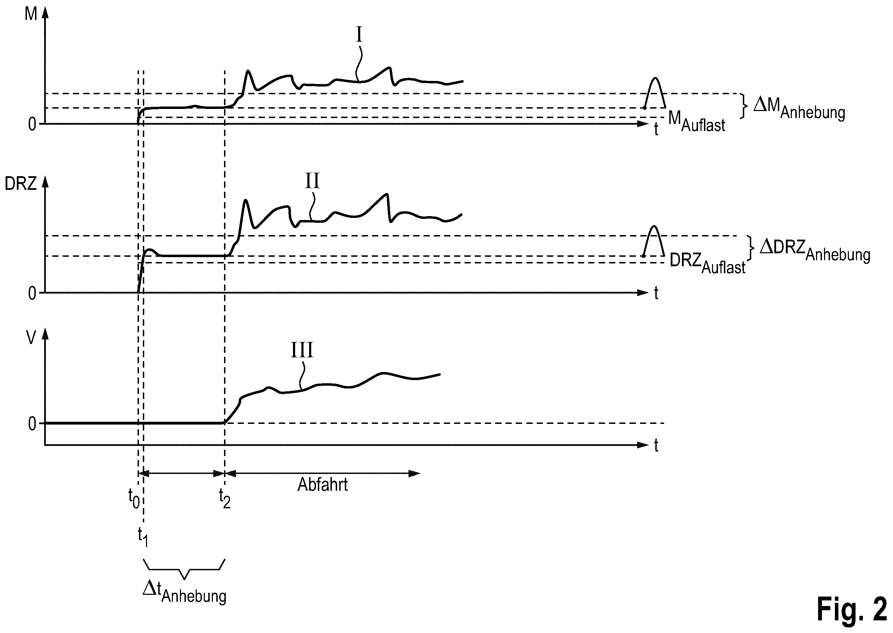

Es wird gebeten, die nachfolgenden Figuren 1 und 2 und die Beschreibung in einer Zusammenschau einzusehen. Es zeigen:
- Figur 1: den strukturellen Aufbau einer Brennkraftmaschine (schematisch) und eine zugehörige Abgasanlage eines Kraftfahrzeuges und
- Figur 2: eine Drehmoment-Kennlinie I, eine Drehzahl-Kennlinie II und eine Geschwindigkeits-Kennlinie III des Kraftfahrzeuges jeweils über der Zeit t.

Das erfindungsgemäße Verfahren zur Reduzierung von Emissionen einer Abgasanlage einer Brennkraftmaschine eines Kraftfahrzeuges 1 beinhaltet folgende Betriebsstrategie:
Es ist vorgesehen, dass die Brennkraftmaschine 100 bei einem Kaltstart zum Startzeitpunkt t₀ mittels eines Starter-Generators 101 in üblicher Weise gestartet wird.

Anschließend ist vorgesehen, dass die Brennkraftmaschine 100 nach dem Kaltstart für eine vorgebbare relativ kurze Zeitspanne Δt_{Anhebung} zwischen t₁ und t₂, nur beispielsweise, bei einem keinen Vorschub des Kraftfahrzeuges 1 erlaubenden gesperrten Kupplungssystem, stationär betrieben wird, so dass die Brennkraftmaschine 100 - mit anderen Worten - noch nicht zum Vortrieb des Fahrzeuges genutzt werden kann.

Dieser stationäre Betrieb, der noch nicht zum Vortrieb des Fahrzeuges genutzt werden kann, wird als sogenannte Abfahrverzögerung des Kraftfahrzeuges 1 vorgesehen und nachfolgend als solche bezeichnet.

Diese Maßnahme wird - im Sinne der Erfindung - als erforderlich angesehen, da durch eine unmittelbar nach dem Startzeitpunkt t₀ liegende Abfahrt des Fahrzeuges, die gegebenenfalls auch mit hoher Last erfolgen kann, das heißt mit einem hohen Drehmoment M der Brennkraftmaschine 100 erfolgt, auch hohe Rohemissionen auftreten, die vor Erreichen der Betriebstemperatur der Abgasanlage 200 nicht konvertiert werden können.

Es ist dabei vorgesehen, dass die Brennkraftmaschine 100 schnellstmöglich in einen optimalen Betriebspunkt geschoben wird, so dass dieser optimale Betriebspunkt im Wesentlichen während der gesamten Zeitspanne Δt_{Anhebung} vorliegt beziehungsweise gefahren wird.

Der optimale Betriebspunkt ist durch eine bestimmte Drehzahl DRZ_{Anhebung} und durch ein bestimmtes Drehmoment M_{Anhebung} definiert, wobei die vorgebbaren Paarungen in einem dafür vorgesehenen Kennfeld eines Applikationsprogramms gespeichert sind.

Zur Einstellung des optimalen Betriebspunktes ist somit vorgesehen, dass (vergleiche Figur 2) eine Anhebung des Drehmoments M in einem vorgebbaren Momentenbereich ΔM_{Anhebung}, die auch als "Auflastung" bezeichnet wird, auf ein bestimmtes Drehmoment M_{Auflast} schnellstmöglich innerhalb der vorgegebenen Zeitspanne Δt_{Anhebung} erfolgt, wobei diesem bestimmten Drehmoment M_{Auflast} in der vorgegebenen Zeitspanne Δt_{Anhebung} eine bestimmte Drehzahl DRZ_{Auflast} in einem Drehzahlbereich ΔDRZ_{Anhebung} zugeordnet ist.

Beispielsweise ist (vergleiche Figur 2, Kennlinien I und II) vorgesehen, dass eine Anhebung des Drehmomentes M auf das bestimmte Drehmoment M_{Auflast} = 20 Nm bei einer auf 1200 Umdrehungen pro Minute angehobenen "aufgelasteten" bestimmten Drehzahl DRZ_{Auflast} erfolgt.

Als maximale Anhebung des bestimmten Drehmomentes M_{Auflast} ist ein Drehmoment M von 40 Nm vorgesehen, wobei die bestimmte Drehzahl DRZ_{Auflast} bis auf maximal 1600 Umdrehungen pro Minute angehoben "aufgelastet" wird.

Ein vorgebbarer Zeitraum zwischen dem Startzeitpunkt t₀ der Brennkraftmaschine 100 und dem Beginnzeitpunkt t₁ der Anhebung und Abfahrverzögerung beträgt maximal 3 s.

Die Länge der vorgebbaren Zeitspanne Δt_{Anhebung} liegt ebenfalls im Sekundenbereich, wobei in dieser Zeitspanne Δt_{Anhebung} die Abfahrverzögerung des Kraftfahrzeuges 1 aktiv ist.

Eine bevorzugte Zeitspanne Δt_{Anhebung} liegt zwischen 3 und 20 s. Es versteht sich, dass der erfindungsgemäße Effekt stärker auftritt, wenn innerhalb der maximalen Zeitspanne Δt_{Anhebung} eine möglichst lange Zeit gewählt wird.

Zudem ist hinsichtlich des gewünschten erfindungsgemäßen Effektes zu beachten, dass bereits eine geringe Lastanhebung, wie zum Beispiel die Anhebung des Drehmomentes M auf das bestimmte Drehmoment M_{Auflast} von beispielsweise 20 Nm innerhalb des vorgesehenen Momentenbereichs ΔM_{Anhebung} (vergleiche Figur 1, Kennlinie I), zu einer Verringerung der Rohemissionen führt, da es von der Brennkraftmaschine 100 ausgehend zu einem höheren Wärmeeintrag in die Abgasanlage 200 kommt. Mit steigender Anhebung des bestimmten Drehmomentes M_{Auflast} über 20 Nm hinaus wird der Wärmeeintrag in die Abgasanlage 200 noch weiter erhöht.

Die Abgasanlage 200 umfasst im Ausführungsbeispiel mindestens einen Drei-Wege-Katalysator 201, idealerweise motornah angeordnet, einen Otto-Partikel-Filter (OPF) 202 sowie einen weiteren Drei-Wege-Katalysator 203 in Unterbodenlage.

Es treten durch den Wärmeeintrag in vorteilhafter Weise geringere Emissionen vor Erreichen der Anspringtemperaturen der abgasanlagenseitigen Komponenten 201, 202, 203 auf. Gleichzeitig wird die Heizdauer bis zum Erreichen der Anspringtemperaturen verkürzt. Im Ergebnis führt dieser Effekt in vorteilhafter Weise insgesamt zu geringeren absoluten Endrohremissionen der Abgasanlage 200, in vorteilhafter Weise insbesondere schon während der Kaltstartphase.

Es ist vorgesehen, dass der Start der Brennkraftmaschine 100 zum Startzeitpunkt t₀ durch den Starter-Generator 101, insbesondere einen Riemen-Starter-Generator, vorgenommen wird, der anschließend zum Beginnzeitpunkt t₁ umgeschaltet und im generatorischen Betrieb betrieben wird. Innerhalb der Steuereinrichtung des Kraftfahrzeuges 1 ist eine entsprechende Umschalteinrichtung vorgesehen.

Ein Starter-Generator im Allgemeinen vereint die Funktionen von Anlasser und Lichtmaschine in einer einzigen elektrischen Maschine. Er kann im Startbetrieb sowohl die Brennkraftmaschine 100 beschleunigen als auch im Generatorbetrieb bei laufendem Motor elektrischen Strom erzeugen.

Starter-Generatoren werden derzeit überwiegend bei den oben genannten Fahrzeugen mit Mild-Hybrid-Antrieb in Kombination mit einem 48-Volt-Bordnetz eingesetzt.

Das heißt, in dem im Ausführungsbeispiel verwendeten Riemen-Starter-Generator wird während der Abfahrverzögerung in der Zeitspanne Δt_{Anhebung} elektrischer Strom generiert, der sofort oder später genutzt werden kann.

Ob über die Zeitspanne Δt_{Anhebung} hinaus, das heißt über den Endzeitpunkt t₂ hinaus, weiter der generatorische Betrieb des Starter-Generators 101 aufrechterhalten wird, kann wahlweise entschieden werden und wird innerhalb der Steuereinrichtung des Kraftfahrzeuges 1 in der dafür vorgesehenen Umschalteinrichtung gesteuert.

Es ist prinzipiell vorgesehen, dass der elektrische Strom, der in der Zeitspanne Δt_{Anhebung} generatorisch erzeugt wurde, im Gesamtsystem "Kraftfahrzeug" 1 direkt in Wärme umgewandelt wird und überschüssiger elektrischer Strom in mindestens einer Batterie eingespeichert wird, wie nachfolgend erläutert wird.

In einer ersten Ausführungsvariante ist es bevorzugt vorgesehen, dass die zur Verfügung stehende elektrische Energie sofort genutzt wird, um einen in die VerbrennungsluftAnsaugstrecke zwischen Verdichter 104 und Brennraum der Brennkraftmaschine 100 integrierten elektrisch beheizten Luft/Luft-Wärmetauscher 102 (vergleiche Figur 1) zu erwärmen.

Der Luft/Luft-Wärmetauscher 102 stellt einen elektrischen Verbraucher dar, welcher der Brennkraftmaschine 100 zugeordnet ist, so dass eine erfindungsgemäße Wirkung auf den Brennraum der Brennkraftmaschine 100 und die an die Brennkraftmaschine angeschlossene Abgasanlage 200 bewirkt wird, wie nachfolgend erläutert wird.

Hierdurch wird die Temperatur der angesaugten Verbrennungsluft angehoben. Diese Erwärmung führt zu positiven Effekten bei der Verbrennung im Brennraum der Brennkraftmaschine, die insbesondere darin zu sehen sind, dass die Gemischbildung kurz nach dem Kaltstart positiv beeinflusst, das heißt verbessert wird. Mit anderen Worten, insbesondere bei geringen Temperaturen der dem Brennraum zugeführten Verbrennungsluft der Brennkraftmaschine beim Kaltstart führt die Erwärmung der Verbrennungsluft über den die elektrische Energie des Starter-Generators 101 nutzenden elektrisch beheizten Wärmetauscher 102 zu einer Verbesserung der Rohemissionen, insbesondere von CO-Emissionen und HC-Emissionen. Durch diesen Effekt werden die in der Kaltstartphase emittierten Endrohremissionen abgesenkt.

Die erste Ausführungsvariante kann mit einer zweiten Ausführungsvariante kombiniert werden oder unabhängig von der zweiten Ausführungsvariante ausgeführt werden.

Erfindungsgemäß ist in einer zweiten Ausführungsvariante bevorzugt vorgesehen, dass in Kombination mit der ersten Ausführungsvariante oder alternativ zu der ersten Ausführungsvariante nicht die Ansaugluft, sondern Kühlwasser über einen elektrischen Heizer 102' (vergleiche Figur 1) mit dem durch den Starter-Generator 101 während der Abfahrverzögerung in der Zeitspanne Δt_{Anhebung} generierten elektrischen Strom betrieben und das Kühlwasser erwärmt wird.

Der Luft/Luft-Wärmetauscher 102 stellt einen elektrischen Verbraucher dar, welcher der Brennkraftmaschine 100 zugeordnet ist, so dass eine erfindungsgemäße Wirkung auf den Brennraum der Brennkraftmaschine 100 und die an die Brennkraftmaschine angeschlossene Abgasanlage 200 bewirkt wird, wie nachfolgend erläutert wird.

Der elektrische Heizer 102' ist im Kühlsystem der Brennkraftmaschine 100 angeordnet. Das heißt, die durch die Lastanhebung der Brennkraftmaschine 100 durch den Starter-Generator 101 erzeugte elektrische Energie wird bei dieser zweiten Ausführungsvariante ebenfalls in Wärme gewandelt. Sie wird bei der zweiten Ausführungsvariante jedoch nicht zur Erwärmung der Ansaugluft, sondern zur Erwärmung des Kühlwassers der Brennkraftmaschine genutzt. Da das Kühlwasser bei Wärmeaufnahme träger reagiert als die Wärme aufnehmende Ansaugluft, ist der positive Effekt der Rohemissionsabsenkung durch eine verbesserte Gemischbildung in der zweiten Ausführungsvariante geringer als bei der ersten Ausführungsvariante.

Unabhängig besteht in jedem Fall ein vorteilhafter Effekt darin, dass die Brennkraftmaschine 100 durch die Lastanhebung in dem optimierten Betriebspunkt betrieben wird, so dass alleine dadurch durch die im System erzeugte zusätzliche Wärme eine Absenkung der Rohemissionen, insbesondere von CO-Emissionen und HC-Emissionen, erfolgt.

Dieser Effekt betrifft somit sowohl die erste als auch die zweite Ausführungsvariante, bei denen, unabhängig von dem angestrebten zusätzlichen Wärmeintrag in die Brennkraftmaschine 100 über den Luft/Luft-Wärmetauscher 102 und/oder elektrischen Heizer 102', bereits durch die Lastanhebung in den optimierten Betriebspunkt der Brennkraftmaschine 100 an sich eine Absenkung der Rohemissionen, insbesondere von CO-Emissionen und HC-Emissionen, erfolgt.

Der elektrisch beheizte Wärmetauscher 102 oder elektrische Heizer 102' werden in bevorzugten Ausgestaltungen als 12V- oder als 48V-Komponenten ausgeführt.

In einer dritten bevorzugten Ausführungsvariante ist es bevorzugt vorgesehen, dass die durch die Lastanhebung der Brennkraftmaschine 100 durch den Starter-Generator 101 erzeugte elektrische Energie ungerichtet einem kraftfahrzeugseitigen Verbraucher 300 zugeführt und dort verbraucht wird. Als Verbraucher wird erfindungsgemäß beispielsweise eine brennkraftmaschinenferne Heckscheibenheizung 301 des Kraftfahrzeuges 1 mit Strom versorgt.

In einer bekannten vierten Ausführungsvariante ist vorgesehen, dass die durch die Lastanhebung der Brennkraftmaschine 100 durch den Starter-Generator 101 erzeugte überschüssige elektrische Energie in dem Kraftfahrzeug 1 in einer dort angeordneten Batterie oder Batterien eingespeichert wird, wobei das Bordnetz und die Batterien auf 12V-Basis oder 48V-Basis konfiguriert ist/sind.

Voraussetzung für die optimale Speicherung der elektrischen Energie in der/den Batterie/n ist ein hinreichend geringer SOC (State of Charge - Ladezustand) der Batterie/n sowie eine von der Temperatur abhängige Leistungsfähigkeit der Aufnahme von elektrischer Energie.

In einer fünften Ausführungsvariante ist bevorzugt vorgesehen, dass die in der Batterie gespeicherte elektrische Energie außerhalb der Abfahrverzögerung nach der vorgegebenen Zeitspanne Δt_{Anhebung} zum Boosten der Brennkraftmaschine 100 eingesetzt wird, indem der Starter-Generator 101 zur Unterstützung der Brennkraftmaschine 100 zum Antreiben des Kraftfahrzeuges 1 eingesetzt wird. Darin wird ebenfalls eine weitere Emissionsminderungsmaßnahme gesehen, da das Boosten eine Verringerung des Kraftstoffverbrauchs insgesamt bewirkt, wodurch die Emissionen des Kraftfahrzeuges 1 insgesamt gemindert werden.

Die Erfindung besteht nach einer weiteren Ausführungsvariante darin, dass die elektrische Energie gemäß der ersten, zweiten und dritten Ausführungsvariante direkt verbraucht und zeitlich parallel dazu überschüssige Energie gemäß der vierten Ausführungsvariante in einer Batterie oder in Batterien gespeichert wird. Insofern ist eine der genannten Ausführungsvarianten oder sind die erste, zweite und dritte Ausführungsvariante mit der vierten Ausführungsvariante kombinierbar.

Die Wirkung der beschriebenen Effekte, insbesondere der ersten und/oder zweiten Ausführungsvariante, wie zusätzlicher Wärmeeintrag in die Abgasanlage 200 in der Kaltstartphase und verbesserte Gemischbildung im Brennraum der Brennkraftmaschine 100 ebenfalls durch den Wärmeeintrag, ist bei geringen Motortemperaturen, beispielsweise -10 °C Umgebungstemperatur (= Ansaugtemperatur der Verbrennungsluft), größer als bei höheren Umgebungstemperaturen, beispielsweise 30 °C. Der positive Effekt tritt allerdings auch bei diesen höheren Kaltstarttemperaturen auf.

Die beschriebene Auflastung und die Abfahrverzögerung der Brennkraftmaschine 100 sowie die Versorgung von den zur Brennkraftmaschine 100 gehörenden Verbrauchern 102, 102' und nicht direkt zur Brennkraftmaschine 100 gehörenden externen Verbrauchern 300 mit elektrischer Energie und/oder die Speicherung der elektrischen Energie in der/den Batterie/n sowie die Nutzung der eingespeicherten Energie für weitere Emissionsminderungsmaßnahmen, zum Beispiel das erläuterte "Boosten", wird von einem nicht dargestellten Steuergerät gesteuert, in dem die beschriebenen oder andere anzusteuernden Komponenten steuerungsseitig miteinander verknüpft sind. Das Applikationsprogramm mit einem Programmalgorithmus, welches in dem Steuergerät in einem dafür vorgesehenen Speicher des Steuergerätes hinterlegt ist, wird zur Durchführung des Verfahrens ausgeführt.

### Bezugszeichenliste

- 1: Kraftfahrzeug
- 100: Brennkraftmaschine
- 101: Starter-Generator
- 102: elektrisch beheizter Wärmetauscher (Luftansaugstrecke)
- 102': elektrischer Heizer (Kühlwasserstrecke)
- 103: Luftfilter
- 104: Verdichter
- 105: Turbine
- 106: Ladeluftkühler
- 200: Abgasanlage
- 201: Drei-Wege-Katalysator
- 202: Otto-Partikel-Filter / OPF
- 203: Drei-Wege-Katalysator
- 300: brennkraftmaschinenferner elektrischer Verbraucher
- 301: Heckscheibenheizung
- M: Drehmoment
- M_{Auflast}: vorgegebenes bestimmtes Drehmoment
- DRZ: Drehzahl
- DRZ_{Auflast}: vorgegebene bestimmte Drehzahl
- V: Geschwindigkeit des Kraftfahrzeuges
- I: Kennlinie Drehmoment M über der Zeit t
- II: Kennlinie Drehzahl DRZ über der Zeit t
- III: Kennlinie Geschwindigkeit V über der Zeit t
- t₀: Startzeitpunkt der Brennkraftmaschine 100
- t₁: Beginnzeitpunkt der Auflastung im Rahmen der Abfahrverzögerung
- t₂: Endzeitpunkt der Auflastung im Rahmen der Abfahrverzögerung
- Δt_{Anhebung}: Zeitspanne der Anhebung
- ΔM_{Anhebung}: Differenzbetrag der Anhebung des Drehmomentes M
- ΔDRZ_{Anhebung}: Differenzbetrag der Anhebung der Drehzahl DRZ

## Patentansprüche

1. Verfahren zur Reduzierung von Emissionen einer Abgasanlage (200) einer Brennkraftmaschine (100) eines Kraftfahrzeuges (1) bei einem Kaltstart, mit den Schritten:
• Starten der Brennkraftmaschine (100) mittels eines der Brennkraftmaschine (100) zugeordneten Starter-Generators (101) zu einem Startzeitpunkt (t₀) und
• Aktivieren einer Abfahrverzögerung zu einem zeitlich nach dem Startzeitpunkt (t₀) liegenden Beginnzeitpunkt (t₁) für eine vorgebbare Zeitspanne (Δt_{Anhebung}), bei der die Brennkraftmaschine (100) derart von einem Antriebsstrang des Kraftfahrzeuges (1) getrennt ist, so dass eine Abfahrt des Kraftfahrzeuges (1) nicht möglich ist,
• Einstellen eines optimalen Betriebspunktes, zeitlich ab dem Beginnzeitpunkt (t₁), der durch eine oberhalb einer dem Kraftfahrzeug (1) zugeordneten Leerlaufdrehzahl einer Kurbelwelle der Brennkraftmaschine (100) liegenden vorgebbaren Drehzahl (DRZ_{Auflast}) und ein vorgebbares erhöhtes Drehmoment (M_{Auflast}) definiert ist,
• Betreiben des Starter-Generators (101) ab dem Beginnzeitpunkt (t₁) in einem generatorischen Betrieb bis zu einem Endzeitpunkt (t₂) in der vorgegebenen Zeitspanne (Δt_{Anhebung}) der Abfahrverzögerung und Erzeugen von elektrischer Energie, während der vorgegebenen Zeitspanne (Δt_{Anhebung}) der Abfahrverzögerung,
• Zuführen und Verbrauchen der vom Starter-Generator (101) erzeugten elektrischen Energie in der vorgegebenen Zeitspanne (Δt_{Anhebung}) der Abfahrverzögerung direkt
∘ zu einem elektrisch beheizten Wärmetauscher (102), der die elektrische Energie in Wärme umwandelt, die in einer Verbrennungsluftansaugstrecke der Brennkraftmaschine (100) zu einer Temperaturanhebung der Verbrennungsluft führt, und/oder
∘ zu einem elektrischen Heizer (102'), der die elektrische Energie in Wärme umwandelt, die in einer Kühlwasserstrecke der Brennkraftmaschine (100) zu einer Temperaturanhebung des Kühlwassers führt, und/oder
∘ zu einem brennkraftmaschinenfernen elektrischen Verbraucher (300) des Kraftfahrzeuges (1),
wobei zeitlich parallel überschüssige Energie in mindestens einer die elektrische Energie speichernden Batterie des Kraftfahrzeuges (1) gespeichert wird.

2. Verfahren nach Anspruch 1, **dadurch gekennzeichnet, dass** das Einstellen des optimalen Betriebspunktes durch eine Anhebung des Drehmoments (M) in einem vorgebbaren Momentenbereich (ΔM_{Anhebung}) auf ein bestimmtes Drehmoment (M_{Auflast}) innerhalb der vorgegebenen Zeitspanne (Δt_{Anhebung}) erfolgt, wobei diesem bestimmten Drehmoment (M_{Auflast}) in der vorgegebenen Zeitspanne (Δt_{Anhebung}) eine bestimmte Drehzahl (DRZ_{Auflast}) in einem Drehzahlbereich (ΔDRZ_{Anhebung}) zugeordnet ist.

3. Verfahren nach Anspruch 2, **dadurch gekennzeichnet, dass** eine maximale Anhebung des bestimmtes Drehmomentes (M_{Auflast}) auf ein Drehmoment (M) von 40 Nm und eine maximale Anhebung der bestimmten Drehzahl (DRZ_{Auflast}) auf 1600 Umdrehungen pro Minute eingestellt wird.

4. Verfahren nach Anspruch 1, **dadurch gekennzeichnet, dass** ein vorgebbarer Zeitraum zwischen dem Startzeitpunkt (t₀) der Brennkraftmaschine (100) und dem Beginnzeitpunkt (t₁) der Anhebung und Abfahrverzögerung maximal 3 s beträgt.

5. Verfahren nach Anspruch 1, **dadurch gekennzeichnet, dass** die vorgebbare Zeitspanne (Δt_{Anhebung}) zwischen 3 s und 20 s eingestellt wird.

6. Verfahren nach Anspruch 1, **dadurch gekennzeichnet, dass** die in der mindestens einen Batterie gespeicherte elektrische Energie außerhalb der Abfahrverzögerung nach der vorgegebenen Zeitspanne (Δt_{Anhebung}) zum Boosten der Brennkraftmaschine (100) eingesetzt wird, indem der Starter-Generator (101) zur Unterstützung der Brennkraftmaschine (100) zum Antreiben des Kraftfahrzeuges (1) eingesetzt wird.

7. Kraftfahrzeug (1), eingerichtet ein Verfahren nach Anspruch 1 zur Reduzierung von Emissionen einer Abgasanlage einer Brennkraftmaschine (100) bei einem Kaltstart auszuführen, wobei die Brennkraftmaschine (100) die mit der Brennkraftmaschine (100) in Verbindung stehende Abgasanlage (200) umfasst, wobei die Brennkraftmaschine (100) mit einem Starter-Generator (101) ausgerüstet ist,
wobei in einer Verbrennungsluftansaugstrecke der Brennkraftmaschine (100) ein elektrisch beheizter Wärmetauscher (102) und/oder in einer Kühlwasserstrecke der Brennkraftmaschine (100) ein elektrischer Heizer (102') und/oder mindestens ein weiterer brennkraftmaschinenferner Verbraucher (300) angeordnet ist/sind, wobei der Starter-Generator (101) elektrisch und ansteuerungsseitig mit dem Wärmetauscher (102) und/oder dem elektrischen Heizer (102') und/oder dem brennkraftmaschinenfernen Verbraucher (300) verknüpft ist/sind, so dass der Wärmetauscher (102) und/oder der elektrische Heizer (102') und/oder der brennkraftmaschinenferne Verbraucher (300) vom Starter-Generator (101) im generatorischen Betrieb des Starter-Generators (101) mit elektrischer Energie versorgt wird/werden, wobei der Starter-Generator (101) elektrisch und ansteuerungsseitig mit mindestens einer Batterie des Kraftfahrzeuges (1) verknüpft ist, so dass die vom Starter-Generator (101) im generatorischen Betrieb erzeugte elektrische Energie in der mindestens einen Batterie speicherbar ist.

8. Kraftfahrzeug (1) nach Anspruch 7, **dadurch gekennzeichnet, dass** die mindestens eine Batterie elektrisch und ansteuerungsseitig mit der Brennkraftmaschine (100) verknüpft ist, so dass die in der mindestens einen Batterie gespeicherte elektrische Energie zum Boosten der Brennkraftmaschine (100) einsetzbar ist, indem der Starter-Generator (101) die Brennkraftmaschine (100) außerhalb der Abfahrverzögerung zum Antreiben des Kraftfahrzeuges (1) unterstützt.

## Claims

1. Method for reducing emissions from an exhaust system (200) of an internal combustion engine (100) of a motor vehicle (1) during a cold start, comprising the steps of:
• starting the internal combustion engine (100) by means of a starter generator (101) associated with the internal combustion engine (100) at a start time (t₀) and
• activating a departure delay, at a start time (t₁) after the start time (t₀), for a predefinable time period (Δt_{Anhebung}) in which the internal combustion engine (100) is separated from a drive train of the motor vehicle (1) such that a departure of the motor vehicle (1) is not possible,
• setting an optimal operating point, beginning from the start time (t₁), which operating point is defined by a predefinable speed (DRZ_{Auflast}) which is above an idle speed of a crankshaft of the internal combustion engine (100) associated with the motor vehicle (1) and by a predefinable increased torque (M_{Auflast}),
• operating the starter generator (101) from the start time (t₁) in a generator mode until an end time (t₂) in the predefined time period (Δt_{Anhebung}) of the departure delay and generating electrical energy during the predefined period (Δt_{Anhebung}) of the departure delay,
• supplying and consuming the electrical energy generated by the starter generator (101) in the predefined time period (Δt_{Anhebung}) of the departure delay directly to
∘ an electrically heated heat exchanger (102) which converts the electrical energy into heat, which leads to an increase in the temperature of the combustion air in a combustion air intake path of the internal combustion engine (100), and/or
∘ an electrical heater (102') which converts the electrical energy into heat, which leads to an increase in the temperature of the cooling water in a cooling water path of the internal combustion engine (100), and/or
∘ an electrical consumer (300) of the motor vehicle (1), which is remote from the internal combustion engine,
wherein, at the same time, excess energy is stored in at least one battery of the motor vehicle (1) that stores the electrical energy.

2. Method according to claim 1, **characterized in that** the optimum operating point is set by increasing the torque (M), in a predefinable torque range (ΔM_{Anhebung}), to a specified torque (M_{Auflast}) within the predefined time period (Δt_{Anhebung}), a specified speed (DRZ_{Auflast}) in a speed range (ΔDRZ_{Anhebung}) being associated with this specified torque (M_{Auflast}) in the predefined time period (Δt_{Anhebung}).

3. Method according to claim 2, **characterized in that** a maximum increase in the specified torque (M_{Auflast}) is set to a torque (M) of 40 Nm and a maximum increase in the specified speed (DRZ_{Auflast}) is set to 1600 revolutions per minute.

4. Method according to claim 1, **characterized in that** a predefinable time period between the start time (t₀) of the internal combustion engine (100) and the start time (t₁) of the increase and departure delay is a maximum of 3 s.

5. Method according to claim 1, **characterized in that** the predefinable time period (Δt_{Anhebung}) is set between 3 s and 20 s.

6. Method according to claim 1, **characterized in that** the electrical energy stored in at least one battery outside of the departure delay after the predefined time period (Δt_{Anhebung}) is used to boost the internal combustion engine (100) by using the starter generator (101) to assist the internal combustion engine (100) in order to drive the motor vehicle (1).

7. Motor vehicle (1) configured to carry out a method according to claim 1 for reducing emissions from an exhaust system of an internal combustion engine (100) during a cold start, wherein the internal combustion engine (100) comprises the exhaust system (200) connected to the internal combustion engine (100), wherein the internal combustion engine (100) is equipped with a starter generator (101),
wherein an electrically heated heat exchanger (102) is arranged in a combustion air intake path of the internal combustion engine (100), and/or an electrical heater (102') and/or at least one further consumer (300), which is remote from the internal combustion engine, is/are arranged in a cooling water path of the internal combustion engine (100), wherein the starter generator (101) is electrically linked to the heat exchanger (102) and/or the electrical heater (102') and/or the consumer (300), which is remote from the internal combustion engine, on the control side so that the heat exchanger (102) and/or the electrical heater (102') and/or the consumer (300), which is remote from the internal combustion engine, is/are supplied with electrical energy by the starter generator (101) in the generator mode of the starter generator (101), wherein the starter generator (101) is electrically linked to at least one battery of the motor vehicle (1) on the control side so that the electrical energy generated by the starter generator (101) in generator mode can be stored in the at least one battery.

8. Motor vehicle (1) according to claim 7, **characterized in that** the at least one battery is electrically linked to the internal combustion engine (100) on the control side so that the electrical energy stored in the at least one battery can be used to boost the internal combustion engine (100) by the starter generator (101) assisting the internal combustion engine (100) outside of the departure delay in order to drive the motor vehicle (1).

## Revendications

1. Procédé de réduction d'émissions d'un système d'échappement (200) d'un moteur à combustion interne (100) d'un véhicule automobile (1) lors d'un démarrage à froid, comportant les étapes suivantes :
• démarrage du moteur à combustion interne (100) par le biais d'un démarreur-générateur (101) associé au moteur à combustion interne (100) à un instant de démarrage (t₀) et
• activation d'une temporisation de départ à un instant de début (t₁) situé temporellement après l'instant de démarrage (t₀), pour un laps de temps (Δt_{Anhebung}) pouvant être prédéfini, pendant lequel le moteur à combustion interne (100) est séparé d'une chaîne cinématique du véhicule automobile (1) de telle sorte qu'un départ du véhicule automobile (1) n'est pas possible,
• réglage d'un point de fonctionnement optimal, dans le temps à partir de l'instant de début (t₁), qui est défini par une vitesse de rotation (DRZ_{Auflast}) pouvant être prédéfinie située au-dessus d'une vitesse de rotation au ralenti d'un vilebrequin du moteur à combustion interne (100) associée au véhicule automobile (1) et par un couple accru (M_{Auflast}) pouvant être prédéfini,
• fonctionnement du démarreur-générateur (101) à partir de l'instant de début (t₁) dans un fonctionnement en mode générateur jusqu'à un instant de fin (t₂) dans le laps de temps (Δt_{Anhebung}) prédéfini de la temporisation de départ et production d'énergie électrique, pendant le laps de temps (Δt_{Anhebung}) prédéfini de la temporisation de départ,
• fourniture et consommation de l'énergie électrique produite par le démarreur-générateur (101) dans le laps de temps (Δt_{Anhebung}) prédéfini de la temporisation de départ directement
∘ à un échangeur de chaleur (102) chauffé électriquement, qui transforme l'énergie électrique en chaleur qui conduit à une augmentation de la température de l'air de combustion dans une section d'admission d'air de combustion du moteur à combustion interne (100), et/ou
∘ à un réchauffeur électrique (102') qui transforme l'énergie électrique en chaleur qui conduit à une augmentation de la température de l'eau de refroidissement dans une section d'eau de refroidissement du moteur à combustion interne (100), et/ou
∘ à un consommateur électrique (300) du véhicule automobile (1) éloigné du moteur à combustion interne,
dans lequel l'énergie excédentaire est stockée en parallèle dans le temps dans au moins une batterie du véhicule automobile (1) qui stocke l'énergie électrique.

2. Procédé selon la revendication 1, **caractérisé en ce que** le réglage du point de fonctionnement optimal s'effectue par une augmentation du couple (M) dans une plage de couple (ΔM_{Anhebung}) pouvant être prédéfinie à un couple (M_{Auflast}) déterminé dans le laps de temps (Δt_{Anhebung}) prédéfini, dans lequel à ce couple (M_{Auflast}) déterminé est associée, dans le laps de temps (Δt_{Anhebung}) prédéfini, une vitesse de rotation (DRZ_{Auflast}) déterminée dans une plage de vitesses de rotation (ΔDRZ_{Anhebung}).

3. Procédé selon la revendication 2, **caractérisé en ce qu'**une augmentation maximale du couple (M_{Auflast}) déterminé est réglée à un couple (M) de 40 Nm et une augmentation maximale de la vitesse de rotation (DRZ_{Auflast}) déterminée est réglée à 1 600 tours par minute.

4. Procédé selon la revendication 1, **caractérisé en ce qu'**un intervalle de temps pouvant être prédéfini entre l'instant de démarrage (t₀) du moteur à combustion interne (100) et l'instant de début (t₁) de l'élévation et la temporisation de départ est de 3 s maximum.

5. Procédé selon la revendication 1, **caractérisé en ce que** le laps de temps (Δt_{Anhebung}) pouvant être prédéfini est réglé entre 3 s et 20 s.

6. Procédé selon la revendication 1, **caractérisé en ce que** l'énergie électrique stockée dans l'au moins une batterie est utilisée en dehors de la temporisation de départ, après le laps de temps (Δt_{Anhebung}) prédéfini pour booster le moteur à combustion interne (100) en utilisant le démarreur-générateur (101) pour assister le moteur à combustion interne (100) pour propulser le véhicule automobile (1).

7. Véhicule automobile (1) conçu pour mettre en œuvre un procédé selon la revendication 1 pour réduire des émissions d'un système d'échappement d'un moteur à combustion interne (100) lors d'un démarrage à froid, dans lequel le moteur à combustion interne (100) comprend le système d'échappement (200) en liaison avec le moteur à combustion interne (100), dans lequel le moteur à combustion interne (100) est équipé d'un démarreur-générateur (101),
dans lequel un échangeur de chaleur (102) chauffé électriquement est agencé dans un tronçon d'aspiration d'air de combustion du moteur à combustion interne (100) et/ou un réchauffeur électrique (102') et/ou au moins un autre consommateur (300) éloigné du moteur à combustion interne sont agencés dans un tronçon d'eau de refroidissement du moteur à combustion interne (100), dans lequel le démarreur-générateur (101) est couplé électriquement et côté commande à l'échangeur de chaleur (102) et/ou au réchauffeur électrique (102') et/ou au consommateur (300) éloigné du moteur à combustion interne, de sorte que l'échangeur de chaleur (102) et/ou le réchauffeur électrique (102') et/ou le consommateur (300) éloigné du moteur à combustion interne est/sont alimenté(s) en énergie électrique par le démarreur-générateur (101) pendant le fonctionnement en générateur du démarreur-générateur (101), dans lequel le démarreur-générateur (101) est couplé électriquement et côté commande à au moins une batterie du véhicule automobile (1), de sorte que l'énergie électrique produite par le démarreur-générateur (101) pendant le fonctionnement en générateur peut être stockée dans l'au moins une batterie.

8. Véhicule automobile (1) selon la revendication 7, **caractérisé en ce que** l'au moins une batterie est couplée électriquement et côté commande au moteur à combustion interne (100), de sorte que l'énergie électrique stockée dans l'au moins une batterie peut être utilisée pour booster le moteur à combustion interne (100), **en ce que** le démarreur-générateur (101) assiste le moteur à combustion interne (100) en dehors de la temporisation de départ pour propulser le véhicule automobile (1).
